# EUROPÄISCHE PATENTSCHRIFT

(11) **EP 1 911 343 B1**
(45) Veröffentlichungstag und Bekanntmachung des Hinweises auf die Patenterteilung: **11.08.2010**
(21) Anmeldenummer: 07118080.6
(22) Anmeldetag: 09.10.2007
(51) Int. Cl.: A01D 43/08

(54) **Maschine zur Ernte stängelartiger Pflanzen mit einem Abstreifer und einem diesem nachgeordneten Führungselement**
Machine for harvesting stalk-type plants with stripper and a downstream guide element
Machine de récolte de plantes à tiges dotée d'un déflecteur et d'un élément de guidage en aval

(30) Priorität: 14.10.2006 DE 102006048659
(43) Veröffentlichungstag der Anmeldung: 16.04.2008
(73) Patentinhaber: Maschinenfabrik Kemper GmbH & Co. KG, 48703 Stadtlohn (DE)
(72) Erfinder: Rickert, Clemens, 49683, Ahaus (DE); Weitenberg, Klemens, 46325, Borken (DE); Schulze Hockenbeck, Leo, 48351, Everswinkel (DE); Hüning, Martin, 48727, Billerbeck (DE)
(74) Vertreter: Holst, Sönke

(56) Entgegenhaltungen:
- DE-A1-102006 020 792
- DE-U1-202005 005 700

## Beschreibung

Die Erfindung betrifft eine Maschine zur Ernte stängelartiger Pflanzen mit einem Rahmen, zwei am Rahmen abgestützten, übereinander angeordneten Förderelementen mit um ihren Umfang verteilten Aussparungen zur Aufnahme und Förderung eines Pflanzenstängel umfassenden Gutstroms, einem ausschließlich im Abstand von seinem bezüglich der Förderrichtung der Pflanzen stromab liegenden Ende mit dem Rahmen verbundenen Abstreifer, der sich in den Zwischenraum zwischen den Förderelementen erstreckt, um die Pflanzenstängel aus den Aussparungen heraus zu bewegen, und mit einem bezüglich der Förderrichtung der Pflanzen unmittelbar stromab des stromab liegenden Endes des Abstreifers folgenden, sich in vertikaler Richtung erstreckenden Führungselement.

### Stand der Technik

In den Druckschriften DE 195 31 918 A und DE 102 58 013 A werden für die Ernte von stängelartigen Pflanzen (wie Mais) geeignete Maschinen zur Anbringung an einem Feldhäcksler beschrieben, die mehrere quer zu der Vorwärtsrichtung, in der die Maschine beim Erntebetrieb über ein Feld bewegt wird, angeordnete Mäh- und Einzugseinrichtungen aufweisen. Die Mäh- und Einzugseinrichtungen umfassen eine untere Schneidscheibe in der Art eines Kreissägenmessers und darüber angeordnete Förderscheiben mit Aussparungen zur Aufnahme von Pflanzen. Die Schneidscheiben werden mit höherer Geschwindigkeit als die Förderscheiben in Drehung versetzt. Die mittels der Schneidscheiben von den im Boden verbleibenden Stoppeln getrennten Pflanzen werden durch die Förderscheiben angenommen und durch die Förderscheiben und in den Zwickelbereichen zwischen den Förderscheiben angeordnete Querfördertrommeln an den Rückseiten der Mäh-und Einzugseinrichtungen zur Mitte der Maschine transportiert und durch Schrägfördertrommeln an einen Einzugskanal eines Feldhäckslers übergeben.

Um die Pflanzen zur Weitergabe an die nachfolgenden Querfördertrommeln bzw. Förderscheiben aus den Förderscheiben heraus zu heben, sind so genannte Abstreifer vorgesehen, deren Spitzen sich in den vertikalen Zwischenraum zwischen zwei übereinander angeordneten Förderscheiben erstrecken. Die Abstreifer sind an ihrem stromab liegenden Ende durch senkrechte Pfosten mit dem Boden der Maschine verbunden. Derartige Abstreifer werden auch als Ausräumer oder Ausnehmer bezeichnet. Weitere Abstreifer sind den Querfördertrommeln und den Schrägfördertrommeln zugeordnet. Sie sind am Abgabeende der Querfördertrommeln und Schrägfördertrommeln durch Pfosten mit dem Boden der Maschine verbunden.

Die als gattungsbildend angesehene EP 0 069 898 A beschreibt eine andere Maschine, die zwei Mäh- und Einzugseinrichtungen mit unteren Schneidscheiben und darüber angeordneten Förderscheiben mit um ihren Umfang verteilten Aussparungen zur Aufnahme von Pflanzen umfasst. Rückwärtig der Mäh- und Einzugseinrichtungen sind S-förmige Abstreifer angeordnet, deren stromauf liegenden Spitzen in den vertikalen Zwischenraum zwischen zwei Förderscheiben eingreifen. An den Rückseiten der Abstreifer wird das Erntegut entlang gefördert. An ihren stromab liegenden Enden der Abstreifer sind an ihren Vorderseiten sich vertikal nach unten erstreckende Pfosten angebracht, die wiederum mit ihren unteren Enden an Getriebegehäusen der Mäh- und Einzugseinrichtungen befestigt sind. Zwischen den voneinander beabstandeten stromab liegenden Enden der Abstreifer ist ein Führungsteil angeordnet, das aus einem aufrecht stehenden Grundkörper und einer davon nach hinten abstehenden Fahne aufgebaut ist, welche aus dem vertikalen Spalt zwischen den beiden Enden der Abstreifer herausragt.

Die DE 199 52 566 C beschreibt eine andere Maschine zur Ernte stängelartiger Pflanzen mit übereinander angeordneten Ketten, an denen nach außen ragende Mitnehmer zur Förderung der Pflanzen angebracht sind. Die Ketten umlaufen um vertikale Achsen rotierende Umlenkräder. Unterhalb der Ketten sind Schneidelemente zum Abschneiden der Pflanzen von im Boden verbleibenden Stümpfen angebracht. Am abgabeseitigen Ende sind zwischen übereinander folgenden Ketten als Abstreifer dienende Bleche angeordnet, die durch rückwärtig der Umlenkräder angeordnete Pfosten mit dem Boden der Maschine verbunden sind. Zwischen den Pfosten und den Abstreifern befinden sich seitliche Öffnungen, durch die hindurch bei zu hohem Anfall von Erntegut vor der Eintrittsöffnung des stromab der Maschine angeordneten Feldhäckslers das aufgestaute Erntegut seitlich entweichen kann. Eine ähnliche Maschine, jedoch ohne die seitlichen Öffnungen, ist in der DE 203 17 022 U beschrieben.

Die EP 0 508 189 A schlägt wiederum eine andere Maschine zur Ernte stängelartiger Pflanzen vor, die ebenfalls rotierende Mäh- und Einzugseinrichtungen mit unteren Schneidscheiben und oberen Förderscheiben umfasst. Den der Längsmittelebene der Maschine benachbarten Mäh- und Einzugseinrichtungen ist jeweils ein einziger Abstreifer zugeordnet, der an einer horizontalen oberen Abdeckung angebracht ist, die stationär an der Mitte der Maschine befestigt ist.

Die GB 20 12 154 A beschreibt eine Maschine zur Ernte stängelartiger Pflanzen, die ebenfalls rotierende Mäh- und Einzugseinrichtungen mit unteren Schneidscheiben und oberen Förderscheiben umfasst. Abstreifer sind vor der Drehachse der Mäh- und Einzugseinrichtungen mit seitlichen Wänden eines Halmteilers und am abgabeseitigen Ende an der Rückseite der Mäh- und Einzugseinrichtungen mit dem Boden der Maschine verbunden.

Die DE 44 41 074 A und DE 195 27 607 A beschreiben weitere Maschinen zur Ernte stängelartiger Pflanzen mit rotierenden Mäh- und Einzugseinrichtungen mit unteren Schneidscheiben und oberen Förderscheiben. Als Ausräumer sind in den Hüllkreis der Förderscheiben eingreifende, gleichsinnig mit den Förderscheiben rotierende Ausräumscheiben mit um ihren Umfang verteilten Ausnehmungen zur Aufnahme von Pflanzenstängeln vorgesehen.

Die DE 20 2005 005 700 U beschreibt eine Maschine zum Mähen von stängelartigem Erntegut, bei der mehrere um die Hochachse rotierende Mäh- und Fördereinrichtungen nebeneinander angeordnet sind. Zwischen zwei gegensinnig rotierenden Mäh- und Fördereinrichtungen sind Abstreifer angeordnet, die das Erntegut an Einspeisetrommeln übergeben, welche um vertikale Achsen rotieren und das Erntegut in den Einzugskanal einer Erntemaschine übergeben.

Nach alledem ist offensichtlich, dass im Stand der Technik eine Vielzahl unterschiedlicher Abstreifer verwendet wurde, um Pflanzenstängel aus den Förderscheiben der rotierenden Mäh- und Einzugseinrichtungen herauszuheben. Im Einsatz treten jedoch, besonders unter ungünstigen Erntebedingungen mit weichen, stark abgereiften oder trockenen Pflanzen, immer wieder Erntegutstaus auf, wenn Pflanzenteile am Abstreifer, insbesondere seinem stromab liegenden Ende, anhaften und sich ansammeln.

### Aufgabe der Erfindung

Die der Erfindung zu Grunde liegende Aufgabe wird darin gesehen, eine Maschine zur Ernte stängelartiger Pflanzen mit Mäh- und Einzugseinrichtungen und einem Abstreifer bereitzustellen, bei dem unerwünschte Ansammlungen von Pflanzen nicht oder in vermindertem Ausmaß zu erwarten sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Maschine zur Ernte stängelartiger Pflanzen umfasst einen Rahmen und eine daran befestige Fördertrommel und/oder eine Mäh- und Einzugseinrichtung. Die Fördertrommel und/oder Mäh- und Einzugseinrichtung umfasst zwei übereinander angeordnete Förderelemente mit um ihren Umfang verteilten Aussparungen zur Aufnahme und Förderung eines Pflanzenstängel umfassenden Gutstroms. Die Förderelemente rotieren insbesondere um eine Achse oder werden als Endlosförderer um Umlenkräder geführt. Ein Abstreifer ist nur im Abstand von seinem bezüglich der Förderrichtung der Pflanzen stromab liegenden Ende (starr, flexibel oder drehbar) mit dem Rahmen verbunden und erstreckt sich in den Zwischenraum zwischen den Förderelementen, um die Pflanzenstängel aus den Aussparungen heraus zu bewegen. Bezüglich der Förderrichtung der Pflanzen stromab des stromab liegenden Endes des Abstreifers und im Abstand davon folgt unmittelbar (d. h. ohne dazwischen angeordnete, mit dem Pflanzenstrom zusammenwirkende Elemente) ein sich in vertikaler Richtung erstreckendes Führungselement mit kreisförmigem Querschnitt. Der Außenumfang des Führungselements ist aufgrund des kreisförmigen Außenquerschnitts glatt und ohne Kanten und Ecken.

Auf diese Weise erreicht man, dass sich am Abstreifer keine oder nur wenige Pflanzenteile ansammeln können, weil er ausschließlich im Abstand von seinem stromab liegenden Ende mit dem Rahmen verbunden ist. Sind mehrere Abstreifer vorhanden, sind sie aus diesem Grunde ebenfalls ausschließlich im Abstand von ihren stromab liegenden Enden untereinander verbunden. Das Führungselement bietet dem Pflanzenmaterial stromab des Abstreifers aufgrund seines kreisförmigem Querschnitts keine Angriffsfläche, an dem sich Pflanzen ansammeln können. Somit werden bei der erfindungsgemäßen Maschine unerwünschte Pflanzenmaterialansammlungen und dadurch bedingte Gutstaus vermieden.

Weiterhin wird vorgeschlagen, dass das Führungselement entgegen der Förderrichtung der Pflanzen geneigt ist, wobei das untere Ende des Führungselements weiter vom nächstliegenden Förderelement beabstandet ist als sein oberes Ende. Durch die Schrägstellung erreicht man, dass Pflanzenmaterial, welches ansonsten zu Verstopfungen führen kann, nach unten geleitet wird. Dort wird es dann beispielsweise von einem benachbarten Förderelement einer Mäh-und Einzugseinrichtung oder deren Schneidrotor oder von einem benachbarten Förderelement einer Fördertrommel abtransportiert.

Ein zwischen dem Führungselement und dem stromab liegenden Ende des Abstreifers frei bleibender Zwischenraum oder Abstand ermöglicht es dem Pflanzenmaterial nach unten zu fallen, woraufhin es in der im vorhergehenden Absatz beschriebenen Weise abtransportiert werden kann.

Der Abstand zwischen dem Führungselement und dem stromab liegenden Ende des Abstreifers ist vorzugsweise über die Höhe des Führungselements zumindest näherungsweise konstant. Bei einem entgegen der Förderrichtung der Pflanzen geneigten Führungselement sind die unteren Abstreifer demnach länger als weiter oben angeordnete Abstreifer oder zumindest weiter in Richtung auf das Führungselement versetzt.

Bei einer bevorzugten Ausführungsform der Erfindung ist das Führungselement passiv (d. h. frei mitlaufend) oder aktiv (d. h. angetrieben) in Drehung versetzbar. Dadurch können Pflanzenteile abgefördert werden und die Reibung der Pflanzen am Führungselement wird vermindert. Bei einem drehbaren Führungselement kann an dessen Unterseite ein Zahnrad angebracht sein, das sich gemeinsam mit dem Führungselement dreht und zum Abfördern von Pflanzenteilen dient, die sich an der Unterseite des Führungselements ansammeln. Dazu kann die Oberseite des Zahnrads mit geeigneten Mitnehmern ausgestattet werden, die insbesondere nachlaufend gekrümmt sind. Der Antrieb des Führungselements kann ebenfalls durch das Zahnrad erfolgen, das an der Unterseite einer dem Führungselement benachbarten, auf einer dem Führungselement gegenüberliegenden Seite des Pflanzenstroms positionierten Fördertrommel angeordnet ist.

Bei einer anderen möglichen Ausführungsform der Erfindung ist das Führungselement starr mit dem Rahmen verbunden und insbesondere an einer Rückwand der Maschine befestigt.

### Ausführungsbeispiel

In den Zeichnungen ist ein nachfolgend näher beschriebenes Ausführungsbeispiel der Erfindung dargestellt. Es zeigt:
- Fig. 1: eine perspektivische Ansicht einer Maschine zur Ernte stängelartiger Pflanzen,
- Fig. 2: eine perspektivische Ansicht einer mittleren Mäh- und Einzugseinrichtung sowie eines ihr zugeordneten Abstreifers und eines Führungselements,
- Fig. 3: eine perspektivische Ansicht einer stromab der Mäh- und Einzugseinrichtung der Figur 1 angeordneten Fördertrommel und des Führungselements, und
- Fig. 4: eine perspektivische Ansicht einer teilweise demontierten Maschine, in der eine äußere Mäh- und Einzugseinrichtung sowie eine Querfördertrommel und die diesen zugeordneten Abstreifer und Führungselemente sichtbar sind.

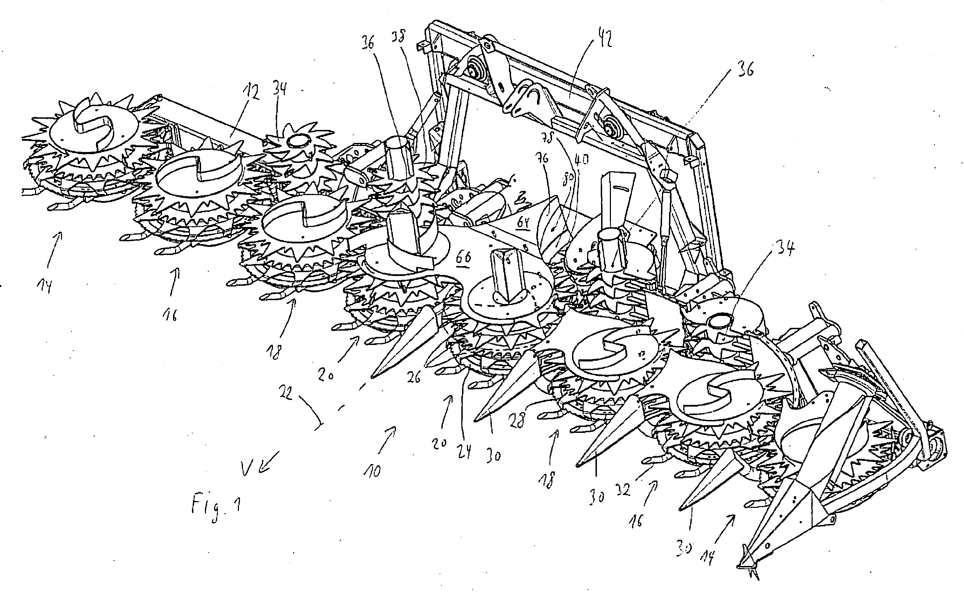

An einem Rahmen 12 einer in der Figur 1 in einer Draufsicht dargestellten Maschine 10 zur Ernte stängelartiger Pflanzen sind beidseits einer Längsmittelebene 22 jeweils vier Mäh- und Einzugseinrichtungen 14, 16, 18 und 20 seitlich nebeneinander befestigt. Die Mäh- und Einzugseinrichtungen 14 bis 20 setzen sich jeweils aus einer unteren, in Drehung versetzbaren Schneidscheibe 24 und mehreren koaxial darüber angeordneten, in Drehung versetzbaren, scheibenförmigen Förderelementen 26 zusammen. Die Schneidscheiben 24 sind am Rand mit scharfen Zähnen ausgestattet oder anderweitig geschärft, um die Pflanzenstängel von den im Boden verbleibenden Stoppeln abzutrennen. Die Stängel finden in Ausbuchtungen 28 der Förderelemente 26 Aufnahme und werden wie unten beschrieben in einen die Maschine 10 tragenden und ihre beweglichen Elemente antreibenden und die Maschine 10 in einer Vorwärtsrichtung V über ein Feld bewegenden Feldhäcksler (nicht gezeigt) transportiert. Im Folgenden beziehen sich Richtungsangaben, wie vorn und hinten, auf die Vorwärtsrichtung V.

Zwischen den Mäh- und Einzugseinrichtungen 14 bis 20 befinden sich jeweils Stängelteiler 30, um die Pflanzen seitlich abzulenken und in den Eingriffsbereich der Mäh- und Einzugseinrichtungen 14 bis 20 zu verbringen, wenn erforderlich. An den Vorderseiten der Mäh- und Einzugseinrichtungen 14 bis 20 sind Aufnahmen 32 für kleinere Stängelteiler (nicht gezeigt) angeordnet. Die Arbeitsbreite der Mäh- und Einzugseinrichtungen 14 bis 20 entspricht jeweils einer Reihe, d. h. etwa 0,75 m. Die Maschine 10 kann somit acht im Abstand von 75 cm gesäte Reihen Mais gleichzeitig ernten. Die Arbeitsbreite der Mäh- und Einzugseinrichtungen 14 bis 20 könnte aber auch kleiner oder größer (z. B. 1,5 m) sein.

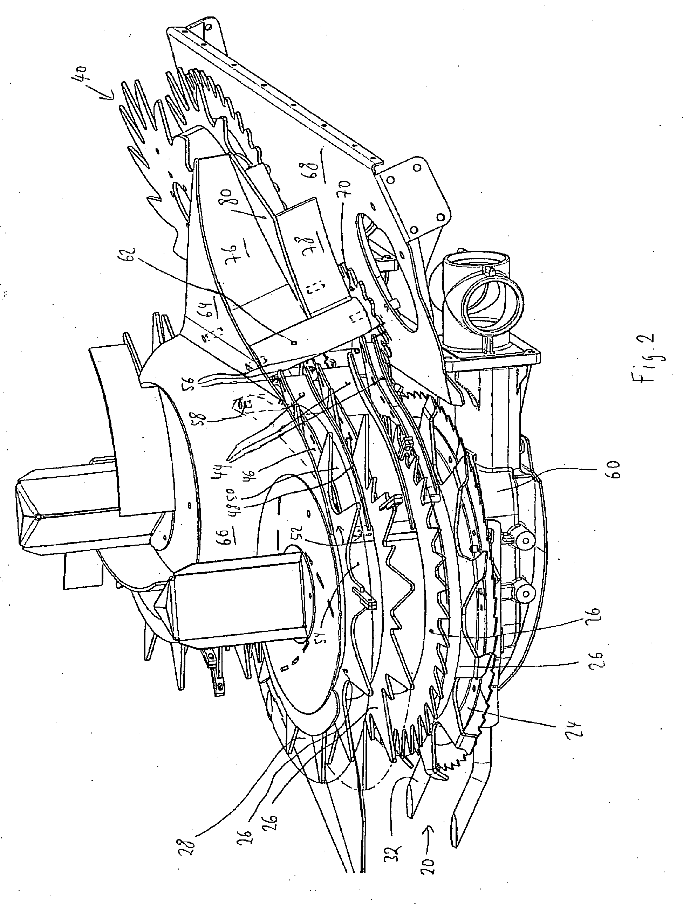

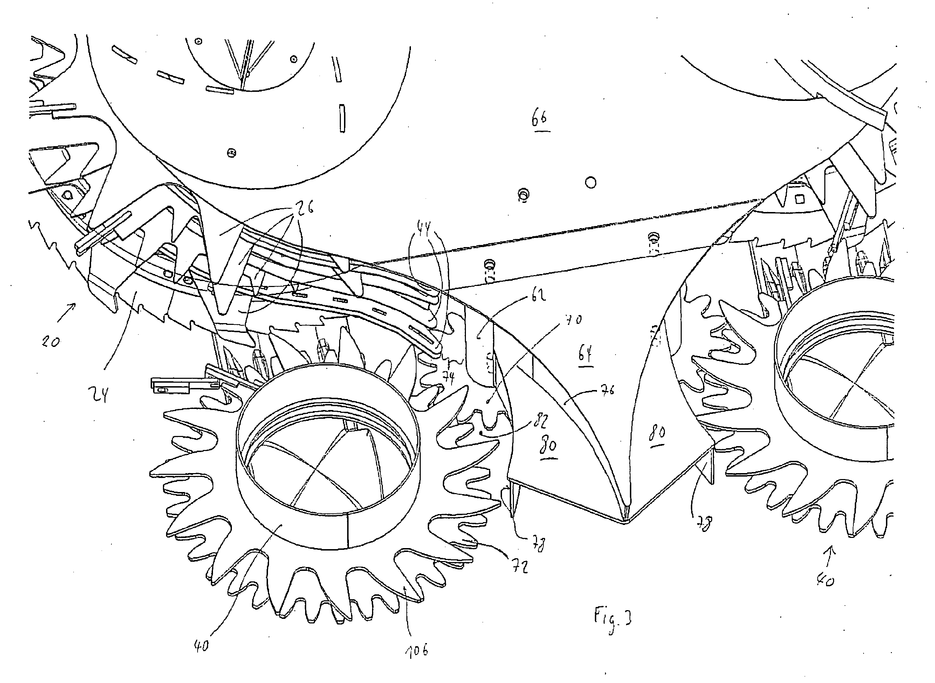

Beim Erntebetrieb werden die Mäh- und Einzugseinrichtungen 14 bis 18 in die durch die Pfeile angedeuteten Richtungen aktiv angetrieben. Die der Längsmittelebene 22 benachbarten, inneren Mäh- und Einzugseinrichtungen 20 fördern die Pflanzen somit zunächst nach außen und nach hinten, wie auch die jeweils zwei nach außen folgenden Mäh- und Einzugseinrichtungen 18, 16, während die äußeren Mäh- und Einzugseinrichtungen 14 sich gegensinnig dazu drehen. Wie anhand der Figur 1 erkennbar ist, übergeben die äußeren Mäh- und Einzugseinrichtungen 14 ihr Erntegut etwa in der Mitte zwischen den Drehachsen der Mäh- und Einzugseinrichtungen 14, 16 an die nächst inneren Mäh- und Einzugseinrichtungen 16. An der Rückseite der nächst inneren Mäh- und Einzugseinrichtungen 16 wird das Erntegut durch rückwärtig des Querförderkanals der Maschine 10 und des darin geförderten Erntegutstroms angeordnete, rotativ angetriebene, äußere Querfördertrommeln 34, die rotativ angetriebene Förderscheiben 94 mit Aussparungen zur Aufnahme von Pflanzenstängeln umfassen, an die Rückseiten der wiederum weiter innen angeordneten Mäh- und Einzugseinrichtungen 18 übergeben. An der Rückseite der weiter innen angeordneten Mäh- und Einzugseinrichtungen 18 wird das Erntegut an innere Querfördertrommeln 36 übergeben, die rotativ angetriebene Förderscheiben 38 mit Aussparungen zur Aufnahme von Pflanzenstängeln umfassen. Die inneren Querfördertrommeln 36 fördern das Erntegut dann gemeinsam mit den Rückseiten der inneren Mäh- und Einzugseinrichtungen 20 schräg nach hinten und in Richtung auf die Mitte der Maschine 10 zu, wo es durch rückwärtig des Querförderkanals angeordnete, rotativ angetriebene Abgabefördertrommeln 40 (s. Figur 2 und 3) mit zur Überbrückung des Höhenunterschieds zwischen der Ebene der Mäh- und Einzugseinrichtungen 14 bis 20 und dem Einzugskanal des Feldhäckslers leicht nach vorn geneigten Drehachsen nach hinten gefördert und an den Einzugskanal des Feldhäckslers abgegeben wird.

Aus Gründen der Übersichtlichkeit sind in der in Figur 1 links eingezeichneten Hälfte der Maschine 10 einige Abdeckungen entfernt, die in der rechts eingezeichneten Hälfte jedoch vorhanden sind. Im Betrieb sind beide Hälften der Maschine mit den Abdeckungen ausgestattet. An der Rückseite des Rahmens 12 ist mittig ein Pendelrahmen 42 angebracht, der zur Befestigung der Maschine 10 am Feldhäcksler dient und eine Bewegung um eine sich horizontal und in Vorwärtsrichtung V erstreckende Achse ermöglicht, die sich etwa in der Mitte des Einzugskanals erstreckt.

Die Figur 2 zeigt die in Vorwärtsrichtung V linke der inneren Mäh- und Einzugseinrichtungen 20. Den vier koaxial übereinander angeordneten Förderelementen 26 der inneren Mäh- und Einzugseinrichtung 20 sind drei Abstreifer 44 zugeordnet, die sich jeweils aus horizontalen oberen Platten 46, horizontalen unteren Platten 48 und dazwischen angeordneten, vertikalen Führungszungen 50 zusammensetzen und zwischen zwei benachbarten Förderelementen 26 angeordnet sind. Die Abstreifer 44 erstrecken sich von einem stromab liegenden Ende 52, das fast an einer zwischen benachbarten Förderelementen 26 angeordneten Trommelwand 54 der Mäh- und Einzugseinrichtung 20 anliegt, bis zu einem bezüglich der Förderrichtung der Pflanzen stromab liegenden Ende 56. Durch einen vertikalen Pfosten 58, der gegenüber dem stromab liegenden Ende 56 weiter zur Längsmittelebene 22 und nach vorn versetzt ist und deshalb einen hinreichenden Abstand vom stromab liegenden Ende 56 und sogar von den Führungszungen 50 aufweist, sind die Abstreifer 44 mit dem Rahmen 12 der Maschine 10 verbunden, insbesondere mit einer Bodenplatte (nicht gezeigt) oder einem Getriebegehäuse 60, das ein zum Antrieb der Mäh- und Einzugseinrichtungen 20 dienendes Getriebe enthält.

Rückwärtig der stromab liegenden Enden 56 der Abstreifer 44 ist ein Führungselement 62 angeordnet, das als Zylinder mit kreisförmigem Querschnitt ausgeführt ist. Es ist an seiner Oberseite drehbar an einer oberen horizontalen, dreieckförmig nach hinten auslaufenden Verlängerung 64 eines (durch die Pfosten 58 mit dem Rahmen 12 verbundenen) Mitteltisches 66 angelenkt und dort mit dem Rahmen 12 verbunden. An seiner Unterseite ist das Führungselement 62 drehbar mit einer Bodenplatte 68 verbunden, die unterhalb der Abgabefördertrommeln 40 angeordnet ist und sich schräg nach hinten und oben erstreckt. Zwischen der Bodenplatte 68 und dem Führungselement 62 ist ein sich über das Führungselement 62 nach außen erstreckendes Zahnrad 70 angeordnet und starr mit dem Führungselement 62 verbunden. Wie anhand der Figur 3 erkennbar, kämmt das Zahnrad 70 mit einem an der Unterseite der benachbarten, auf der anderen Seite des sich hier nach hinten erstreckenden Förderkanals 82 für den Pflanzenstrom angeordneten Abgabefördertrommel 40 angeordneten Zahnrad 72 und wird durch die Abgabefördertrommel 40 angetrieben. Die Drehachse des Führungselements 62 ist schräg nach vorn und oben geneigt und erstreckt sich parallel zur Drehachse der Abgabefördertrommel 40. Da der unterste Abstreifer 44 länger als der darüber angeordnete Abstreifer 44 ist, welcher wiederum länger als der darüber angeordnete, oberste Abstreifer 44 ist, verbleiben zwischen den stromab liegenden Enden 56 der Abstreifer 44 und dem Führungselement 62 etwa gleiche Abstände 74.

Stromab des Führungselements 62 folgen sich vertikal erstreckende Führungswände 76, 78, die sich radial zum Führungselement 62 erstrecken und mit einem sehr engen Spalt an das Führungselement 62 anschließen. Eine obere Führungswand 76 schließt sich an die Unterseite der horizontalen, dreieckförmig nach hinten auslaufenden Verlängerung 64 des Mitteltisches 66 an. An der Unterseite der oberen Führungswand 76 ist eine horizontale Zwischenplatte 80 angeordnet, die in der Draufsicht etwa rautenförmig ist. Die der Abgabefördertrommel 40 zugewandte Seite der Zwischenplatte 80 ist konkav gekrümmt. Die stromab liegenden, rückwärtigen Kanten der Zwischenplatte 80 verlaufen schräg nach hinten und innen zu einer Spitze aus. An der Unterseite der Zwischenplatte 80 schließt sich die untere Führungswand 78 an. Die Höhe der Abgabefördertrommel 40 entspricht etwa der Höhe der Zwischenplatte 80.

Die stromab liegenden Enden 56 der Abstreifer 44 sind nicht untereinander verbunden, da die Verbindung untereinander und mit dem Rahmen 12 in großem Abstand von ihnen durch den Pfosten 58 erfolgt. Somit kann sich kein Erntegut an Verbindungen zwischen den Abstreifern 44 ansammeln. Den Abstreifern 44 folgt in Flussrichtung des Ernteguts unmittelbar (nach dem Abstand 74) das Führungselement 62. Aufgrund des kreisförmigen Querschnitts des Führungselements 62 sind keine Kanten o. ä. vorhanden, an denen sich Erntegut ansammeln kann. Der Abstand 74 zwischen den Enden 56 der Abstreifer 44 und dem Führungselement 62 und die Neigung des Führungselements 62 ermöglichen, dass sich eventuell ablösende Pflanzenteile, z. B. Blätter, nach unten fallen. Dort werden sie durch das Zahnrad 70 abtransportiert, ggf. auch durch Förderelemente 106 oder das Zahnrad 72 des Abgabetrommelförderers 40. Die sich an das Führungselement 62 anschließenden Führungswände 76, 78 ermöglichen einen unproblematischen Weitertransport der Pflanzen.

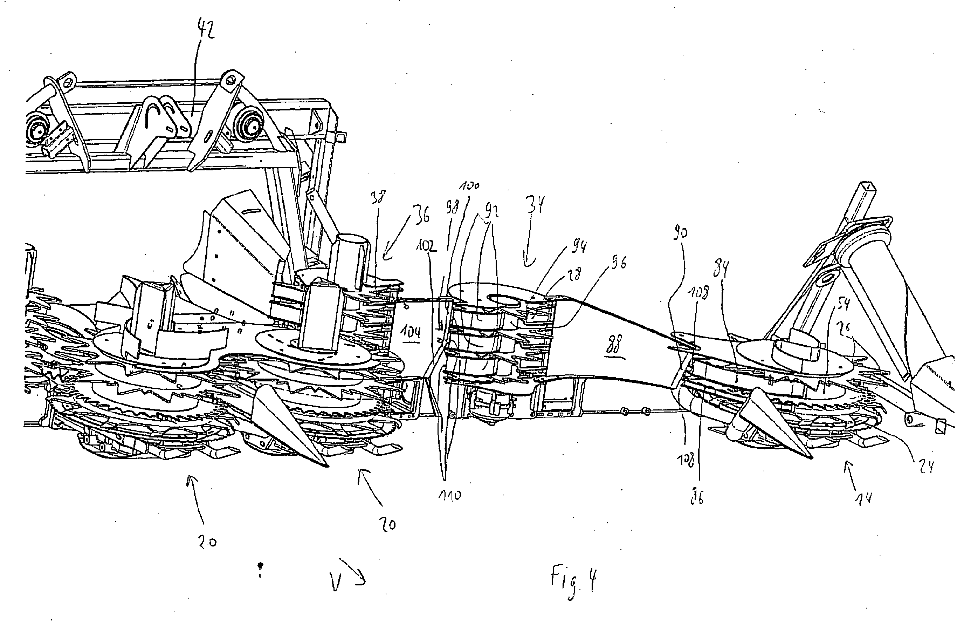

In der Figur 4 ist die Maschine 10 in einem teilweise demontierten Zustand dargestellt, um die äußere Mäh- und Einzugseinrichtung 14 und die äußeren Querfördertrommeln 34 besser erkennbar zu machen.

Zwischen den beiden Förderelementen 26 der äußeren Mäh- und Einzugseinrichtung 14 ist ein Abstreifer 84 angeordnet, der zwischen den Förderelementen 26 angeordnete Trommelwände 54 der äußeren Mäh- und Einzugseinrichtung 14 teilweise umschließt und rückwärtig der äußeren Mäh- und Einzugseinrichtung 14 mit dem Rahmen 12 verbunden ist. Der Abstreifer 84 setzt sich (wie die Abstreifer 44 in Figur 2 und 3) aus horizontalen oberen Platten, horizontalen unteren Platten und dazwischen angeordneten, vertikalen Führungszungen zusammen. Ein weiterer Abstreifer 86, der in Aufbau und Anbringung mit dem Abstreifer 84 übereinstimmt, lediglich etwas niedriger ist, befindet sich zwischen dem unteren Förderelement 26 und der unteren Schneidscheibe 24 der Mäh- und Einzugseinrichtung 14.

Rückwärtig des Querförderkanals der Maschine 10 befindet sich stromab der äußeren Mäh- und Einzugseinrichtung 14 eine sich vertikal erstreckende Rückwand 88, an deren der äußeren Mäh- und Einzugseinrichtung 14 zugewandten Ende ein zylindrisches Führungselement 90 mit kreisförmigen Querschnitt starr angebracht ist. Das Führungselement 90 ist entgegen der Förderrichtung geneigt angeordnet, so dass das obere Ende des Führungselements 90 einen kleineren Abstand vom oberen Förderelement 26 der äußeren Mäh- und Einzugseinrichtung 14 aufweist als ihn das untere Ende des Führungselements 90 vom unteren Förderelement 26 der äußeren Mäh- und Einzugseinrichtung 14 hat. Zwischen den stromab liegenden Enden 108 der Abstreifer 84, 86 und dem Führungselement 90 verbleibt demnach ein Zwischenraum, der über die Höhe des Führungselements 90 etwa gleich ist, da der untere Abstreifer 86 länger als der obere Abstreifer 84 ist.

Auch der äußeren Querfördertrommel 34 sind Abstreifer 92 zugeordnet. Sie umschließen zwischen den Förderelementen 26 angeordnete Trommelwände 94 der äußeren Querfördertrommel 34 teilweise und sind rückwärtig der äußeren Querfördertrommel 34 mit dem Rahmen 12 verbunden. Die Abstreifer 92 setzen sich (wie die Abstreifer 44 in Figur 2 und 3) aus horizontalen oberen Platten, horizontalen unteren Platten und dazwischen angeordneten, vertikalen Führungszungen zusammen.

Rückwärtig des Querförderkanals der Maschine 10 befindet sich stromab der äußeren Querfördertrommel 34 eine sich vertikal erstreckende Rückwand 104, an deren äußeren Querfördertrommel 34 zugewandten Ende ein zylindrisches Führungselement 98 mit kreisförmigen Querschnitt starr angebracht ist. Das Führungselement 98 umfasst einen sich vertikal erstreckenden oberen Abschnitt 100 und einen unteren Abschnitt 102, der entgegen der Förderrichtung geneigt angeordnet ist, so dass das obere Ende des unteren Abschnitts 102 des Führungselements 98 einen kleineren Abstand vom benachbarten Förderelement 94 der äußeren Querfördertrommel 34 aufweist als ihn das untere Ende des unteren Abschnitts 102 des Führungselements 98 vom untersten Förderelement 94 der äußeren Querfördertrommel 34 hat. Zwischen den stromab liegenden Enden 110 der Abstreifer 92 und dem Führungselement 98 verbleibt demnach ein Zwischenraum, der über die Höhe des Führungselements 90 variiert, da alle Abstreifer 92 gleich lang sind und vertikal übereinander enden.

Die in der Figur 4 dargestellten Abstreifer 92 und Führungselemente 98 der äußeren Querfördertrommel 34 könnten alternativ oder zusätzlich auch der inneren Querfördertrommel 36 zugeordnet werden.

Die stromab liegenden Enden 108, 110 der Abstreifer 84, 86 und 92 sind ebenfaslls nicht untereinander verbunden, da die Verbindung untereinander und mit dem Rahmen 12 in großem Abstand von ihnen rückwärtig der Drehachsen der äußeren Mäh- und Einzugseinrichtung 14 bzw. der äußeren Querfördertrommel 34 erfolgt. Somit kann sich kein Erntegut an Verbindungen zwischen den Abstreifern 84, 86 und 92 ansammeln. Den Abstreifern 84, 86 und 92 folgen in der Flussrichtung des Ernteguts die Führungselemente 90 bzw. 98. Aufgrund des kreisförmigen Querschnitts der Führungselemente 90, 98 sind keine Kanten o. ä. vorhanden, an denen sich Erntegut ansammeln kann. Der Abstand zwischen den Enden 108 zw. 110 der Abstreifer 84, 86 bzw. 92 und dem in Flussrichtung folgenden Führungselement 90 bzw. 98 und die Neigung der Führungselemente 90, 98 ermöglichen, das sich eventuell ablösende Pflanzenteile, z. B. Blätter, nach unten fallen. Dort werden sie durch die Förderelemente 26 und/oder die Schneidscheiben 24 der jeweils folgenden Mäh- und Einzugseinrichtung 16 bzw. 18 abtransportiert, die sich gleichsinnig mit den darüber angeordneten Förderelementen 26 drehen.

Bei einer Maschine 10 mit einer größeren Anzahl an Mäh- und Einzugseinrichtungen 14 bis 20 können weitere Mäh- und Einzugseinrichtungen (nicht gezeigt) zwischen den äußeren Mäh- und Einzugseinrichtungen 14 und den nach innen folgenden Mäh- und Einzugseinrichtungen 16 eingefügt werden, deren Drehrichtung (wie in der DE 195 31 918 A) der Drehrichtung der nach innen folgenden Mäh- und Einzugseinrichtungen 16 entspricht.

Weiterhin ist anzumerken, dass die äußeren Mäh- und Einzugseinrichtungen 14 nur zwei koaxial übereinander angeordnete Förderelemente 26 aufweisen. Die nach innen folgenden Mäh- und Einzugseinrichtungen 16, 18 weisen drei koaxial übereinander angeordnete Förderelemente 26 auf. Die inneren Mäh- und Einzugseinrichtungen 20 umfassen hingegen vier übereinander angeordnete Förderelemente 26. Hier handelt es sich um eine unabhängige Erfindung, für die separat Schutz beansprucht werden kann.

Die inneren Querfördertrommeln 36 sind wesentlich höher als die ihnen vorgelagerten Mäh- und Einzugseinrichtungen 14 bis 20 und als die äußeren Querfördertrommeln 34 und umfassen auch mehr koaxial übereinander angeordnete Förderelemente 38 als diese. Die Abgabefördertrommeln 40 sind hingegen nur etwa so hoch wie die vorgeordneten Mäh- und Einzugseinrichtungen 20 und die Zwischenplatte 80. Oberhalb der Zwischenplatte 80 wird durch die obere Führungswand 76 ein sich nach hinten erstreckender Förderkanal gebildet, der breiter ist als der Förderkanal 82 zwischen der Abgabefördertrommel 40 und der unteren Führungswand 78. Der Aufbau und die Anordnung der Abgabefördertrommeln 40 stellt eine weitere, unabhängige Erfindung dar, für die separat Schutz beansprucht werden kann.

Schließlich stellt auch die geneigte Anordnung der Führungselemente 62, 90, 98 entgegen der Förderrichtung der Pflanzen, wobei das untere Ende des Führungselements 62, 90, 98 weiter vom nächstliegenden Förderelement 26, 94 beabstandet ist als sein oberes Ende, eine selbstständige Erfindung dar, die auch bei Führungselementen ohne kreisförmigen Querschnitt und bei Führungselementen Verwendung finden kann, die stromab von Abstreifern angeordnet sind, welche nicht ausschließlich im Abstand von seinem bezüglich der Förderrichtung der Pflanzen stromab liegenden Ende 56, 108, 110 mit dem Rahmen 12 verbunden sind.

## Patentansprüche

1. Maschine (10) zur Ernte stängelartiger Pflanzen mit einem Rahmen (12), zwei am Rahmen abgestützten, übereinander angeordneten Förderelementen (26, 94) mit um ihren Umfang verteilten Aussparungen (28) zur Aufnahme und Förderung eines Pflanzenstängel umfassenden Gutstroms, einem ausschließlich im Abstand von seinem bezüglich der Förderrichtung der Pflanzen stromab liegenden Ende (56, 108, 110) mit dem Rahmen (12) verbundenen Abstreifer (44, 84, 86, 92), der sich in den Zwischenraum zwischen den Förderelementen (26, 94) erstreckt, um die Pflanzenstängel aus den Aussparungen (28) heraus zu bewegen, und mit einem bezüglich der Förderrichtung der Pflanzen unmittelbar stromab des stromab liegenden Endes des Abstreifers (44, 84, 86, 92) folgenden, sich in vertikaler Richtung erstreckenden Führungselement (62, 90, 98), **dadurch gekennzeichnet, dass** das Führungselement (62, 90, 98) einen kreisförmigen Querschnitt aufweist und dass der Außenumfang des Führungselements (62, 90, 98) glatt und ohne Kanten und Ecken ist.

2. Maschine (10) nach Anspruch 1, **dadurch gekennzeichnet, dass** das Führungselement (62, 90, 98) entgegen der Förderrichtung der Pflanzen geneigt ist, wobei das untere Ende des Führungselements (62, 90, 98) weiter vom nächstliegenden Förderelement (26, 94) beabstandet ist als sein oberes Ende.

3. Maschine (10) nach Anspruch 1 oder 2, **dadurch gekennzeichnet, dass** zwischen dem Führungselement (62, 90, 98) und dem stromab liegenden Ende (56, 108, 110) des Abstreifers (44, 84, 86, 92) ein freier Abstand (74) verbleibt.

4. Maschine (10) nach Anspruch 3, **dadurch gekennzeichnet, dass** der Abstand (74) zwischen dem Führungselement (62, 90, 98) und dem stromab liegenden Ende des Abstreifers (44, 84, 86) über einen Teil der Höhe oder die ganze Höhe des Führungselements (62, 90, 98) zumindest näherungsweise konstant ist.

5. Maschine (10) nach einem der Ansprüche 1 bis 4, **dadurch gekennzeichnet, dass** das Führungselement (62) aktiv oder passiv in Drehung versetzbar ist.

6. Maschine (10) nach Anspruch 5, **dadurch gekennzeichnet, dass** das Führungselement (62) an seiner Unterseite mit einem oberhalb einer Bodenplatte (68) im Pflanzenstrom angeordneten Zahnrad (70) verbunden ist, das gemeinsam mit dem Führungselement (62) drehbar ist.

7. Maschine (10) nach Anspruch 6, **dadurch gekennzeichnet, dass** das Zahnrad (70) mit einem weiteren Zahnrad (72) kämmt, das an der Unterseite einer dem Führungselement (62) benachbarten, auf einer dem Führungselement (62) gegenüberliegenden Seite des Pflanzenstroms positionierten Fördertrommel (40) angeordnet ist und zum Antrieb des Zahnrads (72) und des Führungselements (62) dient.

8. Maschine (10) nach einem der Ansprüche 1 bis 4, **dadurch gekennzeichnet, dass** das Führungselement (90, 98) starr mit dem Rahmen (12) verbunden ist.

9. Maschine (10) nach Anspruch 8, **dadurch gekennzeichnet, dass** das Führungselement (90, 98) an einer Rückwand (88, 104) der Maschine (10) befestigt ist.

10. Maschine (10) nach einem der vorhergehenden Ansprüche, **dadurch gekennzeichnet, dass** die Förderelemente (26) einer Mäh- und Einzugseinrichtung (14, 20) oder einer Fördertrommel (34) zugeordnet sind.

## Claims

1. Machine (10) for harvesting stalk-like plants, having a frame (12), two conveying elements (26, 94) arranged one above the other supported on the frame and having recesses (28) distributed around their periphery for accommodating and conveying a stream of material comprising plant stalks, having a stripper (44, 84, 86, 92) connected exclusively at a distance from its downstream end (56, 108, 110) in the plant conveying direction to the frame (12) and extending into the gap between the conveying elements (26, 94) in order to move the plant stalks out of the recesses (28), and having a guide element (62, 90, 98) extending in the vertical direction immediately downstream of the downstream end of the stripper (44, 84, 86, 92) in the plant conveying direction, **characterized in that** the guide element (62, 90, 98) has a circular cross section and **in that** the outer periphery of the guide element (62, 90, 98) is smooth with no edges or corners.

2. Machine (10) according to Claim 1, **characterized in that** the guide element (62, 90, 98) is inclined counter to the plant conveying direction, wherein the lower end of the guide element (62, 90, 98) is further away than its upper end from the nearest conveying element (26, 94).

3. Machine (10) according to Claim 1 or 2, **characterized in that** a free distance (74) remains between the guide element (62, 90, 98) and the downstream end (56, 108, 110) of the stripper (44, 84, 86, 92).

4. Machine (10) according to Claim 3, **characterized in that** the distance (74) between the guide element (62, 90, 98) and the downstream end of the stripper (44, 84, 86) is at least approximately constant over some or all of the height of the guide element (62, 90, 98).

5. Machine (10) according to one of Claims 1 to 4, **characterized in that** the guide element (62) can be set into rotation actively or passively.

6. Machine (10) according to Claim 5, **characterized in that** the underside of the guide element (62) is connected to a gear wheel (70) which is arranged in the plant stream above a base plate (68) and can be rotated together with the guide element (62).

7. Machine (10) according to Claim 6, **characterized in that** the gear wheel (70) meshes with a further gear wheel (72) arranged on the underside of a conveying drum (40) positioned adjacent to the guide element (62) on a side of the plant stream opposite the guide element (62), and serves to drive the gear wheel (72) and the guide element (62).

8. Machine (10) according to one of Claims 1 to 4, **characterized in that** the guide element (90, 98) is connected rigidly to the frame (12).

9. Machine (10) according to Claim 8, **characterized in that** the guide element (90, 98) is secured to a rear wall (88, 104) of the machine (10).

10. Machine (10) according to one of the preceding claims, **characterized in that** the conveying elements (26) are associated with a mowing or gathering device (14, 20) or a conveying drum (34).

## Revendications

1. Machine (10) de récolte de plantes à tiges comprenant un cadre (12), deux éléments de transport (26, 94) disposés l'un au-dessus de l'autre et supportés sur le cadre, avec des évidements (28) répartis sur leur périphérie pour recevoir et transporter un flux de matière contenant des tiges de plantes, un déflecteur (44, 84, 86, 92) connecté au cadre (12) uniquement à distance de son extrémité (56, 108, 110) située en aval par rapport au sens de transport des plantes, qui s'étend dans l'espace intermédiaire entre les éléments de transport (26, 94), afin de déplacer les tiges de plantes hors des évidements (28), et un élément de guidage (62, 90, 98) s'étendant dans la direction verticale, suivant immédiatement en aval de l'extrémité du déflecteur (44, 84, 86, 92) située en aval, par rapport à la direction de transport des plantes, **caractérisée en ce que** l'élément de guidage (62, 90, 98) présente une section transversale circulaire et **en ce que** la périphérie extérieure de l'élément de guidage (62, 90, 98) est lisse et sans arêtes ni coins.

2. Machine (10) selon la revendication 1, **caractérisée en ce que** l'élément de guidage (62, 90, 98) est incliné à l'encontre de la direction de transport des plantes, l'extrémité inférieure de l'élément de guidage (62, 90, 98) étant plus éloignée de l'élément de transport le plus proche (26, 94) que son extrémité supérieure.

3. Machine (10) selon la revendication 1 ou 2, **caractérisée en ce qu'**un espace libre (74) subsiste entre l'élément de guidage (62, 90, 98) et l'extrémité située en aval (56, 108, 110) du déflecteur (44, 84, 86, 92).

4. Machine (10) selon la revendication 3, **caractérisée en ce que** l'espacement (74) entre l'élément de guidage (62, 90, 98) et l'extrémité située en aval du déflecteur (44, 84, 86) est au moins approximativement constant sur une partie de la hauteur ou sur toute la hauteur de l'élément de guidage (62, 90, 98).

5. Machine (10) selon l'une quelconque des revendications 1 à 4, **caractérisée en ce que** l'élément de guidage (62) peut être mis en rotation de manière active ou passive.

6. Machine (10) selon la revendication 5, **caractérisée en ce que** l'élément de guidage (62) est connecté au niveau de son côté inférieur à une roue dentée (70) disposée au-dessus d'une plaque de fond (68) dans le flux des plantes, laquelle peut tourner conjointement avec l'élément de guidage (62).

7. Machine (10) selon la revendication 6, **caractérisée en ce que** la roue dentée (70) s'engrène avec une autre roue dentée (72), qui est disposée sur le côté inférieur d'un tambour de transport (40) adjacent à l'élément de guidage (62), positionné sur un côté du flux de plantes opposé à l'élément de guidage (62), et qui sert à l'entraînement de la roue dentée (72) et de l'élément de guidage (62).

8. Machine (10) selon l'une quelconque des revendications 1 à 4, **caractérisée en ce que** l'élément de guidage (90, 98) est connecté rigidement au cadre (12).

9. Machine (10) selon la revendication 8, **caractérisée en ce que** l'élément de guidage (90, 98) est fixé à une paroi arrière (88, 104) de la machine (10).

10. Machine (10) selon l'une quelconque des revendications précédentes, **caractérisée en ce que** les éléments de transport (26) sont associés à un dispositif de fauche et d'amenée (14, 20) ou à un tambour de transport (34).
